(19) **Europäisches Patentamt**
**European Patent Office**
**Office européen des brevets**

(11) **EP 1 861 974 B1**

(12) **EUROPÄISCHE PATENTSCHRIFT**

(45) Veröffentlichungstag und Bekanntmachung des Hinweises auf die Patenterteilung:
**10.09.2008  Patentblatt 2008/37**

(21) Anmeldenummer: **06724977.1**

(22) Anmeldetag: **08.03.2006**

(51) Int Cl.:
**H04L 25/49** (2006.01)     **H04L 1/00** (2006.01)

(86) Internationale Anmeldenummer:
**PCT/EP2006/060556**

(87) Internationale Veröffentlichungsnummer:
**WO 2006/097422 (21.09.2006 Gazette 2006/38)**

(54) **KORREKTUR VON EINZELBITFEHLERN IN DPSK-CODIERTEN CODEWÖRTERN ANHAND DER EMPFANGENEN KUMMULATIVEN DIGITALEN SUMME**

CORRECTION OF INDIVIDUAL BIT ERRORS IN DPSK-ENCODED CODE WORDS USING THE RECEIVED CUMULATIVE DIGITAL SUM

CORRECTION D'ERREURS DE BITS SIMPLES DANS DES MOTS-CODES A CODAGE DPSK A PARTIR DE LA SOMME NUMERIQUE CUMULATIVE REÇUE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **16.03.2005   DE 102005012069**

(43) Veröffentlichungstag der Anmeldung:
**05.12.2007   Patentblatt 2007/49**

(73) Patentinhaber: **Robert Bosch GmbH**
**70442 Stuttgart (DE)**

(72) Erfinder:
 • **BOEHL, Eberhard**
   **72768 Reutlingen (DE)**
 • **BOEHL, Michael**
   **70199 Stuttgart (DE)**

(56) Entgegenhaltungen:
**US-B1- 6 198 413**

EP 1 861 974 B1

**EP 1 861 974 B1**

**Beschreibung**

Die Erfindung betrifft ein Verfahren zur Fehlerbehandlung bei einer Übertragung eines Datums, ein System, das dazu ausgebildet ist, eine Fehlerbehandlung durchzuführen, ein Computerprogramm mit Programmcodemitteln und ein Computerprogrammprodukt mit Programmcodemitteln.

Bei einem bekannten Verfahren zur Fehlerbehandlung bei einer Übertragung von codierten Daten über ein Kommunikationssystem wird zu den Daten ein Datenwort nach einer vorgebbaren Codiervorschrift ausgewählt, wobei die Daten als Bits, die zwei verschiedene Werte, Einsen und Nullen annehmen können, dargestellt werden. Es ist hierbei vorgesehen, wenigstens eine laufende digitale Summe (RDS: running digital sum) derart zu bilden, dass eine aufsummierte Differenz einer Gesamtzahl der Einsen und eine Gesamtzahl der Nullen wenigstens über das Datenwort gebildet wird und diese laufende digitale Summe vorzugsweise periodisch nach einer bestimmten Anzahl von übertragenen Datenwörtern übertragen wird. Des weiteren wird die laufende digitale Summe anhand der übertragenen Datenwörter in einem Empfänger neu berechnet und periodisch verglichen. Bei einer möglicherweise auftretenden Abweichung ist es möglich, einen Fehler zu erkennen.

Ausgehend hiervon ist vorgesehen, ein Verfahren sowie eine Vorrichtung zur Fehlerbehandlung bereitzustellen, mit dem es möglich ist, Einzelbitfehler zu erkennen und zu korrigieren.

Hierzu werden ein Verfahren, ein System, ein Computerprogramm und ein Computerprogrammprodukt mit den Merkmalen der unabhängigen Patentansprüche vorgestellt.

Vorteile der Erfindung

Das erfindungsgemäße Verfahren ist zu einer Fehlerbehandlung bei einer Übertragung eines Datums über ein Kommunikationssystem vorgesehen. In einem ersten Schritt werden hierbei für das Datum mindestens zwei aus Bits bestehende Datenwörter nach einer vorgegebenen Codiervorschrift generiert. Die somit generierten Datenwörter stellen das mindestens eine Datum in einer Zeichenfolge, die zwei eindeutig unterscheidbare Bitwerte, bspw. Nullen und Einsen, aufweisen kann, dar.

Es ist vorgesehen, dass für jedes dieser Datenwörter in einem zweiten Schritt eine laufende digitale Summe (RDS: running digital sum) berechnet wird. Zur Berechnung einer laufenden digitalen Summen kann vorgesehen sein, dass eine erste Summe über eine Gesamtzahl des ersten der beiden möglichen Bitwerte, z.B. der Eins, innerhalb des Datenworts und eine zweite Summe über eine Gesamtzahl des zweiten der beiden möglichen Bitwerte, z. B. der Null, innerhalb dieses Datenworts gebildet und eine Differenz dieser beiden Summen berechnet wird. Die Differenz gibt somit Aufschluss über eine Häufigkeit der beiden unterschiedlichen Bitwerte innerhalb des Datenworts.

Unter Berücksichtigung der laufenden digitalen Summen der für das Datum generierten Datenwörter wird ein Datenwort ausgewählt. Eine erste laufende digitale Summe entspricht dabei der über das ausgewählte Datenwort gebildeten laufenden digitalen Summe oder sie wird durch Addition der laufenden digitalen Summe des ausgewählten Datenworts zu einer aktuell gegebenen laufenden digitalen Summe berechnet. Das Datenwort kann danach ausgewählt werden, dass die erste laufende digitale Summe betragsmäßig kleinstmöglich wird. In einem dritten Schritt wird das ausgewählte Datenwort nach einem Modulationsverfahren in ein Codedatenwort umgewandelt. Dabei wird jeweils einem Bit des Datenworts eine Zweierbitfolge mit zwei unterschiedlichen Bitwerten zugeordnet. Das somit bereitgestellte Codedatenwort besitzt demnach doppelt so viele Zeichen wie das ausgewählte Datenwort. Bei den unterschiedlichen Bitwerten des Codedatenworts kann es sich ebenfalls um Nullen und Einsen handeln. Je nach Art des Modulationsverfahrens weist eine Zweierbitfolge des Codedatenworts die beiden möglichen Bitfolgen "10" oder "01" auf.

In einem weiteren Schritt werden das Codedatenwort und die erste laufende digitale Summe bspw. periodisch übertragen. Eine derartige Übertragung erfolgt zwischen einzelnen Teilnehmern, die über das Kommunikationssystem miteinander verbunden sind Dabei kann ein als Sender ausgebildeter erster Teilnehmer die laufende digitale Summe und das Codedatenwort an mindestens einen als Empfänger ausgebildeten zweiten Teilnehmer übertragen.

In einem folgenden Schritt des Verfahrens wird das von dem mindestens einen zweiten Teilnehmer empfangene Codedatenwort daraufhin überprüft, ob dieses eine Zweierbitfolge mit zwei gleichen Bitwerten, bspw. zwei Nullen oder zwei Einsen aufweist. Falls dies der Fall sein sollte, so wurde bei der Übertragung ein Bit des Codedatenworts innerhalb einer Zweierbitfolge verfälscht. Somit ist es möglich, eine mit einem Fehler behaftete Zweierbitfolge zu identifizieren. Diese mit einem Fehler behaftete Zweierbitfolge kann mittels bzw. mit Hilfe der ersten laufenden digitalen Summe korrigiert werden.

In einer möglichen Ausführungsform des Verfahrens ist vorgesehen, dass das Datenwort für das Datum unter zwei möglichen Datenwörtern ausgewählt wird. Hierzu werden dem Datum nach der vorgegebenen Codiervorschrift ein erstes Datenwort und ein zweites Datenwort zugeordnet, wobei diese beiden Datenwörter zueinander invertiert sind. Dies bedeutet, dass einem Bit an einer Stelle des ersten Datenworts ein erster von zwei möglichen Bitwerten und einem entsprechenden Bit an derselben Stelle des zweiten Datenworts ein zweiter von zwei möglichen Bitwerten zugeordnet wird. Ob nun das erste oder das zweite Datenwort ausgewählt wird, kann durch eine spezifische Bedingung, wie bspw.

dass die erste laufende digitale Summe einen kleinstmöglichen Betrag besitzen soll, bestimmt werden. Die erste laufende digitale Summe kann hierbei direkt der laufenden digitalen Summe des auszuwählenden Datenworts entsprechen oder der Summe dieser laufenden digitalen Summe des auszuwählenden Datenworts mit einer aktuell gegebenen laufenden digitalen Summe. Ein Wert für die aktuell gegebene laufende digitale Summe hängt bspw. von einer laufenden digitalen Summe mindestens eines Vorgänger-Datenworts des auszuwählenden Datenworts ab.

Gemäß einer weiteren Ausführungsform des Verfahrens wird jedes empfangene Codedatenwort nach einem zu dem Modulationsverfahren korrespondierenden Demodulationsverfahren, also dem umgekehrten Modulationsverfahren, im Fall des Auftretens einer mit einem Fehler behafteten Zweierbitfolge in mindestens zwei Datenwörter umgewandelt. Zu diesen derart bereitgestellten Datenwörtern wird jeweils eine zweite digitale Summe berechnet. Die Berechnung der zweiten laufenden digitalen Summe erfolgt gemäß der Berechnung der ersten laufenden digitalen Summe. Die jeweilige zweite laufende digitale Summe kann demnach bspw. der laufenden digitalen Summe der jeweiligen demodulierten Datenwörter entsprechen oder sich aus der Summe der jeweiligen laufenden digitalen Summe zu einer aktuell gegebenen laufenden digitalen Summe ergeben. Bei Vergleich der jeweiligen zweiten laufenden digitalen Summen mit der empfangenen ersten laufenden digitalen Summe kann der Fehler korrigiert werden, denn nur für genau eines der Datenwörter stimmt die zweite laufende digitale Summe mit der ersten laufenden digitalen Summe überein. Somit ist ein ursprüngliches Datum in eindeutiger Weise rekonstruierbar.

Nimmt man bspw. an, dass nur ein Bit in dem Codedatenwort verfälscht wurde, so ist aufgrund des Modulationsverfahrens, wonach eine Zweierbitfolge "01" oder "10" ist, sofort klar, dass eine empfangene Zweierbitfolge entweder "00" oder "11" ist. Mit Hilfe der oben genannten Codiervorschrift und der ersten laufenden digitalen Summe erfolgt eine Korrektur; der fehlerhaften Zweierbitfolge wird die korrekte Zweierbitfolge "10" oder "01" zugeordnet.

Ob eine Zweierbitfolge innerhalb des Codedatenworts einen Einzelbitfehler aufweist, kann demnach allein anhand einer Folge der Bitwerte, also der Struktur des Datenworts, bestimmt werden. Welches der beiden Einzelbits innerhalb dieser Zweierbitfolge mit einem Fehler behaftet ist, lässt sich durch Vergleich der ersten mit der zweiten laufenden digitalen Summe feststellen. Aufgrund der laufenden digitalen Summe ist bekannt, wie oft der erste der beiden Bitwerte und wie oft der zweite der beiden Bitwerte innerhalb des Datenworts auftritt.

Prinzipiell kann bereits das Datum in Bitwerten codiert werden, die in Verbindung mit der Codiervorschrift und der laufenden digitalen Summe (RDS) eine Fehlererkennung ermöglicht. Dies ist insbesondere dann der Fall, wenn eine Anzahl unterschiedlicher Datenwörter m kleiner ist als eine Variantenzahl $2^n$ möglicher Codedatenwörter mit n Bits.

Das Verfahren ist auch für eine Gruppe von Daten durchführbar. Dabei ist es denkbar, dass zu jedem Datum der Gruppe zwei Datenwörter generiert werden. Welches dieser beiden Datenwörter jeweils zur weiteren Bearbeitung für das Datum ausgewählt wird, kann wiederum von einem Wert der ersten laufende digitalen Summe abhängen. Die erste laufende digitale Summe kann so berechnet werden, dass sie sich als Summe über sämtliche laufenden digitalen Summen sämtlicher auszuwählender Datenwörter der Gruppe ergibt und bspw. betragsmäßig kleinstmöglich sein soll. Das Datenwort für ein Datum wird bspw. in Abhängigkeit der aktuell gegebenen laufenden digitalen Summe zwischen den beiden zur Auswahl stehenden Datenwörtern ausgewählt. In diesem Fall entspricht die aktuell gegebene laufende digitale Summe einem Zwischenwert für die erste laufende digitale Summe, die für die innerhalb der Gruppe bislang ausgewählten Datenwörter berechnet wurde. Somit ist es möglich, die laufende digitale Summe über die Gruppe der Datenwörter im Mittel möglichst zu null werden zu lassen. Durch diese Maßnahme kann ein weitgehend gleichstromfreier Code realisiert werden.

Mit Hilfe des vorliegenden Verfahrens können Einzelbitfehler entdeckt werden. Mit einer Information über eine Fehlerstelle ist eine Korrektur bislang mehrdeutiger Fehler, die keine eindeutige Fehlerzuordnung auf ein Einzelbit zulassen, möglich.

Als mögliches Modulationsverfahren zur Bereitstellung des auf dem Datenwort beruhenden Codedatenworts ist ein sog. DPSK (Differential Phase Shift Keying bzw. differentielle Phasenumtastung)-Verfahren geeignet. Hierbei wird jeweils ein Bit des Datenworts nach dem DPSK-Verfahren mit einer Trägerfrequenz für die innerhalb des Kommunikationssystems zu übertragenden Daten moduliert. Das DPSK-Verfahren sieht einen Phasensprung der Trägerfrequenz in Abhängigkeit von den zu übertragenden Daten vor. Dabei werden jedem Datenwort zwei unterschiedliche DPSK-Code-Werte zugeordnet. Demnach besteht diese Zweierbitfolge entweder aus den Bitwerten "10" oder "01". Eine jeweilige Reihenfolge dieser beiden möglichen Einzelbits hängt von dem Bitwert des jeweiligen zu modulierenden oder zuzuordnenden Bits des Datenworts ab.

Zur möglichen Realisierung einer geeigneten Modulation des Datenworts seien zwei unterschiedliche DPSK-Verfahren angeführt. Bei einer mittels des DPSK-Verfahrens vorgenommenen Modulation wird jedes einzelne Bit des Datenworts in zwei Teilen mit unterschiedlichem Pegel, die bspw. durch Nullen und Einsen darstellbar sind, dargestellt. Somit ist eine Übertragung der Daten oder Datenwörter mit einem konstanten Frequenzsignal möglich.

Bei einem ersten DPSK-Verfahren, das auch als Original-DPSK-Verfahren bezeichnet wird, wird das Datenwort dadurch moduliert, indem ein Phasensprung eines konstanten Frequenzsignals der Trägerfrequenz in Abhängigkeit des zu übertragenen Bits des Datenworts vorgenommen wird, wobei eine Bitfolge des dabei bereitzustellenden Codedatenworts nicht verändert wird, falls der folgende Bitwert des Datenworts ein erster von zwei möglichen Bitwerten, bspw.

null, ist, und wobei die Bitfolge invertiert wird, falls der folgende Bitwert des Datenworts ein zweiter von zwei möglichen Bitwerten, bspw. eine Eins, ist.

Anstatt lediglich die beiden möglichen Bitwerte des Datenworts zu übertragen, wird immer die Trägerfrequenz, eine "10"-Folge, ob nun invertiert oder nicht-invertiert, übertragen. Solange ein Bitwert innerhalb des Datenworts eine Null ist, wird die Bitfolge unverändert zur vorhergehenden Bitfolge übernommen. Falls der nächste Bitwert innerhalb des Datenworts eins ist, wird die Folge der Bitwerte, bspw. eine "10"-Folge zu einer "01 "-Folge und umgekehrt invertiert. Dies ist durch eine Genierungsvorschrift darstellbar. Diese Genierungsvorschrift beinhaltet eine EXOR-Verknüpfung (Antivalenz), die hier durch das #-Zeichen dargestellt ist, zwischen der Trägerfrequenz T(t) und einem gespeicherten Binärwert B(t) zum Zeitpunkt t. Der gespeicherte Binärwert sei am Anfang für t=0 B(t)=0. D(t) bezeichnet einen Bitwert einer Bitfolge des Datenworts. M(t) bezeichnet ein moduliertes Signal. Der gespeicherte Binärwert wird mit jeder Änderung der Bitwerte innerhalb des Datenworts verändert:

$$B(t+1) = B(t)\#(D(t)\#D(t+1))$$

und

$$M(t+1) = B(t+1)\#T(t+1)$$

oder

$$M(t) = B(t)\#T(t).$$

Eine Eigenschaft des somit modulierten Signals bzw. des dadurch bereitgestellten Codedatenworts ist, dass bei einer einem Bit des Datenworts zugeordneten Zweierbitfolge innerhalb des Codedatenworts in der Mitte immer ein Wechsel stattfinden muss, so dass nur die Zweierbitfolgen "10" oder "01" möglich sind.

Alternativ kann als Modulationsverfahren zur Umwandlung des Datenworts in das Codedatenwort ein zweites DPSK-Verfahren, das auch als modifiziertes DPSK-Verfahren oder PSK-Verfahren bezeichnet wird, herangezogen werden. Einem der zwei möglichen Bitwerte des Datenworts wird jeweils eine der zwei möglichen Zweierbitfolgen des Codedatenworts zugeordnet. Hierbei wird dem Bit des Datenworts eine erste von zwei möglichen Zweierbitfolgen zugeordnet, falls das zu modulierende Bit innerhalb des Codedatenworts einen ersten von zwei möglichen Bitwerten aufweist. Falls das zu modulierende Bit des Datenworts einen zweiten von zwei möglichen Bitwerten aufweist, wird diesem innerhalb des Codedatenworts eine zweite der beiden möglichen Zweierbitfolgen zugeordnet.

Dies kann bedeuten, dass dem Bitwert "0" des Datenworts die Zweierbitfolge "10" und dem Bitwert "1" die Zweierbitfolge "01" zugeordnet wird. Es ist auch eine umgekehrte, invertierte Zuordnungsvorschrift denkbar. Diese Vorgehensweise ist ebenfalls durch eine Generierungsvorschrift darstellbar, bei der eine EXOR-Verknüpfung zwischen der Trägerfrequenz und jeweils einem Bitwert des Datenworts berücksichtigt wird:

$$M(t) = D(t) \# T(t)$$

Auch hier besteht eine Eigenschaft des modulierten Signals darin, dass in der Mitte eines einem Bit des Datenworts zugeordneten Zweierbitwerts immer ein Wechsel, "10" oder "01", stattfinden muss.

Tabelle 1 zeigt anhand eines Beispieles in einer ersten Zeile die Zeit t. D(t), in der zweiten Zeile, bezeichnet einen vorgegebenen Bitwert einer Bitfolge eines Datenworts. In einer dritten bzw. vierten Zeile sind die Trägerfrequenz T(t) bzw. ein Binärwert B(t) zum Zeitpunkt t notiert. M(t)$_{ORIG}$ in der fünften Zeile zeigt Werte des nach dem Original-DPSK-Verfahren erzeugten Codedatenworts. M(t)$_{MOD}$ in der sechsten Zeile zeigt Werte für ein nach dem modifizierten DPSK-Verfahren erzeugtes Datenwort.

Tabelle 1:

| t | 1 | | 2 | | 3 | | 4 | | 5 | | 6 | | 7 | | 8 | | 9 | | 10 | | 11 | | 12 | | 13 | | 14 | |
|---|---|---|---|---|---|---|---|---|---|---|---|---|---|---|---|---|---|---|---|---|---|---|---|---|---|---|---|---|
| D(t) | 0 | | 1 | | 0 | | 0 | | 1 | | 1 | | 1 | | 0 | | 0 | | 1 | | 1 | | 0 | | 0 | | 0 | |
| T(t) | 0 | 1 | 0 | 1 | 0 | 1 | 0 | 1 | 0 | 1 | 0 | 1 | 0 | 1 | 0 | 1 | 0 | 1 | 0 | 1 | 0 | 1 | 0 | 1 | 0 | 1 | 0 | 1 |
| B(t) | 0 | 0 | 1 | 1 | 1 | 1 | 1 | 1 | 0 | 0 | 1 | 1 | 0 | 0 | 0 | 0 | 0 | 0 | 1 | 1 | 0 | 0 | 0 | 0 | 0 | 0 | 0 | 0 |
| M(t) orig | 0 | 1 | 1 | 0 | 1 | 0 | 1 | 0 | 0 | 1 | 1 | 0 | 0 | 1 | 0 | 1 | 0 | 1 | 1 | 0 | 0 | 1 | 0 | 1 | 0 | 1 | 0 | 1 |
| M(t) mod | 0 | 1 | 1 | 0 | 0 | 1 | 0 | 1 | 1 | 0 | 1 | 0 | 1 | 0 | 0 | 1 | 0 | 1 | 1 | 0 | 1 | 0 | 0 | 1 | 0 | 1 | 0 | 1 |

Durch Anwendung der beiden möglichen DPSK-Verfahren wird dem übertragenen Codedatenwort eine eindeutige Struktur aufgeprägt, so dass jede Zweierbitfolge innerhalb des Codedatenworts aus zwei verschiedenen Einzelbitwerten besteht. Sofern ein Einzelbitwert während der Übertragung verfälscht werden sollte, ergibt sich eine aus zwei gleichen Einzelbitwerten bestehende Zweierbitfolge, entweder "00" oder "11 ". Somit ist eine fehlerhafte Zweierbitfolge innerhalb des Codedatenworts in eindeutiger Weise identifizierbar.

Das erfindungsgemäße System ist dazu ausgebildet, für ein zwischen mindestens zwei Teilnehmern zu übertragendes Datum eine Fehlerbehandlung durchzuführen. Das System weist einen ersten und mindestens einen zweiten Teilnehmer auf.

Hierbei ist ein erster Teilnehmer dazu ausgebildet, für das Datum nach einer vorgebbaren Codiervorschrift mindestens zwei aus Bits bestehende Datenwörter zu generieren.

Hierbei wird je nach Wert einer jeweils über die Datenwörter gebildeten laufenden digitalen Summe eines der beiden Codedatenwörter ausgewählt, das dem gleichen Datum entspricht.

Des weiteren berechnet der erste Teilnehmer eine erste laufende digitale Summe (RDS). Diese kann bspw. der laufenden digitalen Summe des ausgewählten Datenworts entsprechen oder sich daraus ergeben, dass zu einer aktuell gegebenen laufenden digitalen Summe die laufende digitale Summe des ausgewählten Datenworts addiert wird. Das ausgewählte Datenwort wird von dem ersten Teilnehmer in ein Codedatenwort umgewandelt, wobei jeweils einem Bit des Datenworts eine Zweierbitfolge mit zwei unterschiedlichen Bitwerten zuzuordnen ist. Der erste Teilnehmer überträgt das Codedatenwort und die erste laufende digitale Summe zu dem mindestens einen zweiten Teilnehmer.

In einer möglichen Ausführungsform sind zur Berechnung der ersten laufenden digitalen Summe bei mehreren Datenwörtern einer Gruppe alle laufenden digitalen Summen der mehreren Datenwörter zu einem die erste laufende digitale Summe ergebenden Gesamtwert aufzuaddieren. Die Gruppe mit den Codedatenwörtern, die aus den Datenwörtern hervorgehen, wird als Daten-Frame bezeichnet. Die dem Daten-Frame zugehörige erste laufende digitale Summe für alle Datenwörter der Gruppe wird von dem ersten Teilnehmer zu mindestens einem zweiten Teilnehmer innerhalb des Systems vorzugsweise periodisch nach diesem Daten-Frame übertragen.

Der mindestens eine zweite Teilnehmer überprüft ein empfangenes Codedatenwort darauf, ob dieses eine Zweierbitfolge mit zwei gleichen Bitwerten aufweist. Ist dies der Fall, so ist die Zweierbitfolge mit den zwei gleichen Einzelbitwerten zwischen den Teilnehmern des Systems fehlerhaft übertragen worden.

Unter Berücksichtigung der ersten laufenden digitalen Summe ist ein mit einem Einzelfehler behaftetes Einzelbit des Codedatenworts identifizierbar und korrigierbar. Ist eine Zweierbitfolge mit einem Fehler behaftet, so erscheint sie als eine Folge von gleichen Einzelbitwerten, entweder als "00" oder "11". Eine derartige fehlerhafte Zweierbitfolge kann der ursprünglichen fehlerfreien Zweierbitfolge "01" oder "10" entsprochen haben. Bei einer Demodulation ergeben sich demnach zwei alternative demodulierte Datenwörter, von denen anhand ihrer jeweiligen laufenden digitalen Summe genau eines als ursprünglich zu übertragendes Datenwort identifiziert werden kann.

Das erfindungsgemäße Computerprogramm mit Programmcodemitteln ist dazu vorgesehen, alle Schritte des erfindungsgemäßen Verfahrens durchzuführen, wenn das Computerprogramm auf einem Computer oder einer entsprechenden Recheneinheit, insbesondere in dem erfindungsgemäßen System oder einer Recheneinheit innerhalb des erfindungsgemäßen Systems durchgeführt wird.

Das erfindungsgemäße Computerprogrammprodukt mit Programmcodemitteln, die auf einem computerlesbaren Datenträger gespeichert sind, ist dazu vorgesehen, alle Schritte des erfindungsgemäßen Verfahrens durchzuführen, wenn das Computerprogramm auf einem Computer oder einer entsprechenden Recheneinheit, insbesondere dem erfindungsgemäßen System oder einer Recheneinheit in dem erfindungsgemäßen System durchgeführt wird.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.

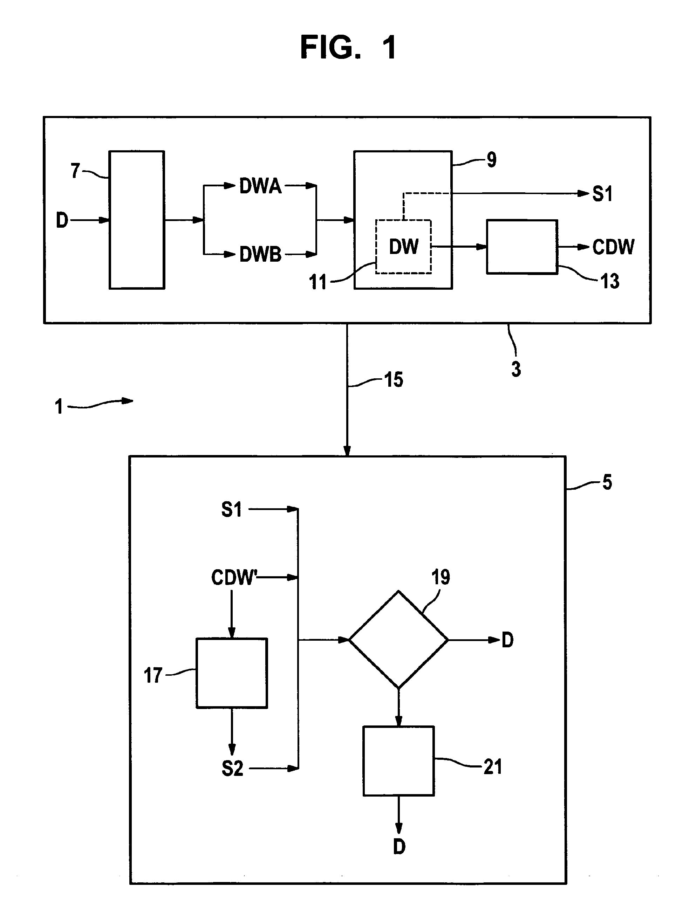

Figur 1     zeigt in schematischer Darstellung eine mögliche Ausführungsform eines erfindungsgemäßen Systems unter Berücksichtigung einzelner Schritte einer möglichen Ausführungsform eines erfindungsgemäßen Verfahrens.

Das in Figur 1 schematisch dargestellte System 1 umfasst einen ersten, als Sender vorgesehenen Teilnehmer 3 sowie einen zweiten, als Empfänger vorgesehenen Teilnehmer 5. Zwischen dem ersten Teilnehmer 3 und dem zweiten Teilnehmer 5 soll als Information ein Datum D übertragen werden. Bei dem Datum D kann es sich um eine Zahl, einen Buchstaben oder jedes andere Zeichen handeln.

Zur Durchführung des Verfahrens ist das Datum D zu codieren, wobei diesem Datum D ein aus Bits, also aus zwei eindeutig unterscheidbaren Zeichen, bspw. Einsen und Nullen bestehendes Datenwort DW zugeordnet wird. Dieses Datenwort ist gemäß einer vorgebbaren Codiervorschrift 7 aus zwei möglichen Datenwörtern, einem ersten Datenwort DWA und einem zweiten, zu dem ersten Datenwort invertierten Datenwort DWB auswählbar. Durch die Codiervorschrift 7 wird sowohl eine eindeutige Verschlüsselung von dem mindestens einen Datum D als auch eine eindeutige Entschlüsselung ausgehend von einem der möglichen Datenwörter DWA oder DWB hin zu dem Datum D bereitgestellt.

Nachfolgend erfolgt eine Berechnung 9, bei der über die beiden Datenwörter DWA und DWB jeweils eine laufende digitale Summe gebildet wird. Die Datenwörter DWA bzw. DWB weisen eine bestimmte Anzahl von z Zeichen auf, wobei der erste der zwei möglichen Bitwerte, beispielsweise eine Eins, innerhalb des Datenworts DWA oder DWB, a-mal auftritt. Demnach tritt der zweite der zwei möglichen Bitwerte, bspw. die Null, (z-a)-mal auf. Die laufende digitale Summe wird aus einer Differenz zwischen der ersten Summe a für eine Gesamtzahl des ersten Bitwerts und einer zweiten Summe (z-a) für eine Gesamtzahl des zweiten Bitwerts innerhalb der Datenwörter DWA und DWB berechnet. Die laufende digitale Summe beträgt im vorliegenden Fall: (2a-z) oder je nach Definition der laufenden digitalen Summe den hierzu negativen Wert (z-2a).

Bei einer Auswahl 11 des Datenworts DW aus den beiden möglichen Datenwörtern DWA und DWB für das Datum D kann ferner eine aktuell gegebene laufende digitale Summe berücksichtigt werden, Ziel kann es dabei sein, dass eine erste laufende digitale Summe S1 betragsmäßig einen möglichst kleinen Wert aufweist und idealerweise null ist. Unter diesem Aspekt wird für das Datum D als eigentliches zur Weiterverarbeitung vorgesehenes Datenwort DW entweder das erste oder das zweite zuordenbare Datenwort DWA oder DWB ausgewählt.

Des weiteren ist vorgesehen, dass das ausgewählte Datenwort DW nach einem Modulationsverfahren 13 in ein Codedatenwort CDW umgewandelt wird. Dabei wird jeweils einem Bit des Datenworts DW eine aus zwei unterschiedlichen Einzelbitwerten gebildete Zweierbitfolge zugeordnet. Als mögliche Modulationsverfahren 13 können für das vorliegende Verfahren so genannte DPSK-Verfahren vorgesehen werden.

Danach erfolgt eine Übertragung 15 des Codedatenworts CDW und der ersten laufenden digitalen Summe S 1 von dem ersten Teilnehmer 3 zu dem zweiten Teilnehmer 5 des Systems 1. Diese Übertragung kann periodisch erfolgen. Es ist nicht auszuschließen, dass bei der Übertragung 15 möglicherweise ein Einzelbit des von dem ersten Teilnehmer 3 ausgesendeten Codedatenworts CDW verfälscht wird. Ein von dem zweiten Teilnehmer 5 empfangenes Codedatenwort CDW' kann deshalb von dem ausgesandten Codedatenwort CDW abweichen.

Ist eine Zweierbitfolge mit einem Fehler behaftet, so erscheint sie als eine Folge von gleichen Einzelbitwerten, entweder als "00" oder "11". Eine derartige fehlerhafte Zweierbitfolge kann der ursprünglichen fehlerfreien Zweierbitfolge "01" oder "10" entsprochen haben. Bei einer Demodulation 17 ergeben sich demnach zwei alternative demodulierte Datenwörter, von denen anhand ihrer jeweiligen laufenden digitalen Summe genau eines als ursprünglich zu übertragendes Datenwort identifiziert werden kann. Die Berechnung einer jeweiligen zweiten digitalen Summe S2 für die zwei alternativen demodulierten Datenwörter erfolgt dabei in Analogie zur Berechnung der ersten laufenden digitalen Summe S1.

Das empfangene Codedatenwort CDW' wird einer Prüfung 19 unterzogen. Dabei wird überprüft, ob dieses empfangene Codedatenwort CDW' eine Zweierbitfolge mit zwei gleichen Einzelbitwerten aufweist. Die Prüfung 15 erfolgt unter Berücksichtigung des Umstands, dass das ursprüngliche, von dem ersten Teilnehmer 3 ausgesandte Codedatenwort CDW gemäß dem Modulationsverfahren 13 Zweierbitfolgen mit zwei verschiedenen Einzelbitwerten aufweisen muss. Außerdem ergeben sich im Falle eines aufgetretenen Einzelbitfehlers, wie bereits erläutert, zwei alternative demodulierte Datenwörter mit entsprechend zwei unterschiedlichen zweiten digitalen Summen S2. Bei der Prüfung 19 wird die erste laufende digitale Summe S1 mit den jeweiligen zweiten digitalen Summen S2 verglichen. Dadurch wird ein weiteres Kriterium zur exakten Identifikation eines aufgetretenen Einzelbitfehlers bereitgestellt.

Somit ergeben sich für das empfangene Codedatenwort CDW' zwei Fälle. Stellt sich nach einem ersten Fall bei der Prüfung 19 heraus, dass das empfangene Codedatenwort CDW' keine Zweierbitfolge mit zwei gleichen Einzelbitwerten aufweist, so wurde das ursprünglich ausgesandte Codedatenwort CDW unter dieser Maßgabe korrekt zwischen den beiden Teilnehmern 3 und 5 übertragen, so dass das empfangene Codedatenwort CDW' dem ausgesandten Codedatenwort CDW entspricht. Somit ist es möglich, aus diesem korrekten empfangenen Codedatenwort CDW' durch Demodulation 17 das Datenwort DW und hieraus unter Berücksichtigung der Codiervorschrift 7 das ursprüngliche Datum D zu rekonstruieren.

Falls sich bei der Prüfung 19 herausstellt, dass eine Zweierbitfolge des empfangenen Codedatenworts CDW' zwei identische Einzelbitwerte aufweist, so ist diese Zweierbitfolge mit einem Fehler bzw. Einzelbitfehler behaftet. Dies bedeutet, dass eine Zweierbitfolge des empfangenen Codedatenworts CDW' aus zwei gleichen Einzelbitwerten, z.B. zwei Nullen oder Einsen besteht. Eine eindeutige Zuordnung des Fehlers und somit eine Korrektur 21 eines der beiden Einzelbitwerte der fehlerhaften Zweierbitfolge erfolgt unter Berücksichtigung der ebenfalls übertragenen ersten laufenden digitalen Summe S1. Die erste laufende digitale Summe S 1 liefert eine Information darüber, wie häufig die beiden Bitwerte innerhalb des ursprünglichen Datenworts DW aufgetreten sind. Unter Berücksichtigung der ersten laufenden digitalen Summe S 1 ist es möglich, der fehlerhaften Zweierbitfolge des empfangenen Codedatenworts CDW' den korrekten ursprünglichen Bitwert des Datenworts DW zuzuordnen.

Eine mögliche Realisierung dieser bevorzugten Ausführungsform des Verfahrens sei an einem konkreten Beispiel dargestellt. Gemäß der vorgebbaren Codiervorschrift werden einem bestimmten Datum D ein erstes Datenwort DWA= "010010" und ein dazu invertiertes, zweites Datenwort DWB= "101101" zugeordnet. Ein Wert für ein letztes Bit dieser beiden Datenwörter DWA und DWB zeigt dabei an, ob das Datenwort aus dem Satz der invertierten oder nicht-invertierten Datenwörter ausgewählt wurde. Wenn bspw. die aktuell gegebene laufende digitale Summe $S1_0 = 4$ war, und sich die erste laufende digitale Summe als Summe der aktuell gegebenen laufenden digitalen Summe und der laufenden digitalen Summe des auszuwählenden Datenworts ergibt, so wird die erste laufende digitale Summe S1 bei Betrachtung des ersten Datenworts DWA S1 = 2 und bei Betrachtung des zweiten Datenworts DWB S1 = 6. Die Berechnung der laufenden digitalen Summe entspricht in dem vorliegenden Fall der Differenz aus der Anzahl der vorkommenden Einsen und der Anzahl der vorkommenden Nullen. Addiert man diese sich so ergebenden jeweiligen laufenden digitalen Summen zu der aktuell gegebenen laufenden digitalen Summe $S1_0 = 4$, so erhält man die jeweils genannten Werte. Um bspw. den Betrag der ersten laufenden digitalen Summe S1 kleinstmöglich zu halten, wird demnach das erste Datenwort DWA als Datenwort DW ausgewählt und zu einem Codedatenwort CDW moduliert.

Als Modulationsverfahren 13 sei im vorliegenden Beispiel ein so genanntes zweites, modifiziertes DPSK-Verfahren vorgesehen. Laut diesem modifizierten DPSK-Verfahren wird nach einer Generierungsvorschrift: M(t) = D(t) # T(t) einem Einzelbitwert D(t) über eine EXOR-Verknüpfung # zwischen der Trägerfrequenz T(t) und diesem Einzelbitwert D(t) eine Zweierbitfolge M(t) und somit ein moduliertes Signal zugeordnet. Ohne Beschränkung der Allgemeinheit wird einem Bitwert "0" des Datenworts DW die Zweierbitfolge "10" zugeordnet. Dem Bitwert "1" des Datenworts DW wird demnach die invertierte Zweierbitfolge "01 zugeordnet.

Die Berechnung 9 der ersten laufenden digitalen Summe S 1 würde in diesem Fall S 1 = 2 ergeben, da der Bitwert "0" innerhalb des Datenworts DW viermal und der Bitwert "1" zweimal vorkommt, was zu einer laufenden digitalen Summe von "-2" führt und bei Addition zur genannten aktuell gegebenen laufenden digitalen Summe $S1_0 = 4$ letztlich S1 =2 ergibt.

Aufgrund des Modulationsverfahrens 13 ergibt sich für das Datenwort DW ein Codedatenwort CDW = "10 01 10 10 01 10".

Alternativ kann das Modulationsverfahren 13 auch mit dem so genannten Original-DPSK-Verfahren durchgeführt werden. Hierbei wird eine Bitfolge eines Codedatenworts CDW nicht verändert, falls der nachfolgende Bitwert des Datenworts DW gleich null ist. Die Bitfolge des Codedatenworts CDW wird andererseits invertiert, falls der nachfolgende Bitwert des Datenworts DW gleich eins ist.

Der zweite Teilnehmer 5 empfängt nach der Übertragung 15 des ausgesandten ursprünglichen Codedatenworts CDW ein entsprechendes, gegebenenfalls durch die Übertragung 15 verfälschtes Codedatenwort CDW'. Bei der Prüfung 19 wird dieses empfangene Codedatenwort CDW' daraufhin untersucht, ob dieses eine Zweierbitfolge mit zwei identischen Einzelbitwerten, also eine Zweierbitfolge, die entweder aus den Einzelbitwerten "00" oder "11" besteht, aufweist. Ist dies der Fall, so wird innerhalb einer fehlerhaften Zweierbitfolge des empfangenen Codedatenworts CDW' das fehlerhafte Einzelbit durch Überprüfung der Codiervorschrift sowie der ersten laufenden digitalen Summe S 1 identifiziert und korrigiert.

Im vorliegenden Beispiel sei angenommen, dass bei der Übertragung 13 das erste Einzelbit der zweiten Zweierbitfolge verfälscht wurde, so dass der zweite Teilnehmer 5 folgendes Codedatenwort CDW' = "10 11 10 10 01 10" empfangen hat. Aufgrund der vorgegebenen Struktur des ausgesandten Codedatenworts CDW sowie des empfangenen Codedatenworts CDW' ist in einfacher Weise zu erkennen, dass die zweite Zweierbitfolge des Codedatenworts CDW' fehlerhaft übertragen worden ist.

Ob nun das erste Einzelbit dieser zweiten Zweierbitfolge verfälscht worden ist, so dass die ursprüngliche Zweierbitfolge "01" lautet, oder ob das zweite Einzelbit dieser Zweierbitfolge verfälscht worden ist, so dass die ursprüngliche Zweierbitfolge "10" lautet, ist unter Berücksichtigung der ersten laufenden digitalen Summe S 1 nachvollziehbar.

Das fehlerhafte Codedatenwort CDW' = "10 11 10 10 01 10" kann aus einer Folge $CDW'_1$ = "10 10 10 10 01 10" oder $CDW'_2$ = "10 01 10 10 01 10" hervorgegangen sein. Bei Demodulation von $CDW'_1$ ergibt sich $DW'_1$ = "0 0 0 0 1 0" mit einer laufenden digitalen Summe von "-4", was bei Addition zur aktuellen gegebenen laufenden digitalen Summe $S1_0$ = 4 eine zweite laufende digitale Summe S2 = 0 ergibt. Bei Demodulation von $CDW'_2$ ergibt sich $DW'_2$ = "0 1 0 0 1 0" mit einer laufenden digitalen Summe von "-2", was bei Addition zur aktuellen gegebenen laufenden digitalen Summe $S1_0$ = 4 eine zweite laufende digitale Summe S2 = 2 ergibt. Bei Vergleich der jeweils sich ergebenden zweiten laufenden digitalen Summe S2 mit der übertragenen ersten laufenden digitalen Summe S1 ergibt sich eindeutig, dass $DW'_2$ dem ursprünglich zu übertragenen Datenwort DW entspricht, der aufgetretene Fehler konnte demnach identifiziert und korrigiert werden.

**Patentansprüche**

1. Verfahren zur Fehlerbehandlung bei einer Übertragung (15) eines Datums (D) über ein Kommunikationssystem (1),

- bei dem für das Datum (D) mindestens zwei aus Bits bestehende Datenwörter (DWA, DWB) nach einer vorgegebenen Codiervorschrift (7) generiert werden, und eines dieser generierten Datenwörter (DWA, DWB) unter Berücksichtigung (11) einer über das entsprechende Datenwort (DWA, DWB) gebildeten laufenden digitalen Summe, wobei die laufende digitale Summe eines Datenwortes einer aufsummierten Differenz einer Gesamtzahl der Einsen und einer Gesamtzahl der Nullen über das Datenwort entspricht, ausgewählt und die laufende digitale Summe des ausgewählten Datenworts (DW) zur Bildung (9) einer ersten laufenden digitalen Summe (S1) verwendet wird,
- bei dem das ausgewählte Datenwort (DW) nach einem Modulationsverfahren (13) in ein Codedatenwort (CDW) umgewandelt wird, wobei jeweils einem Bit des Datenworts (DW) eine Zweierbitfolge mit zwei unterschiedlichen Einzelbitwerten zugeordnet wird,
- bei dem das Codedatenwort (CDW) und die erste laufende digitale Summe (S1) übertragen werden,
- bei dem ein empfangenes Codedatenwort (CDW) daraufhin überprüft wird, ob in diesem eine Zweierbitfolge mit zwei gleichen Einzelbitwerten auftritt, somit eine mit einem Fehler behaftete Zweierbitfolge identifiziert und mittels der ersten laufenden digitalen Summe (S1) korrigiert wird.

2. Verfahren nach Anspruch 1, bei dem das ausgewählte Datenwort (DW) für das Datum (D) aus den mindestens zwei generierten Datenwörtern (DWA, DWB) unter der Bedingung ausgewählt wird, dass die erste laufende digitale Summe (S1) einen kleinstmöglichen Betrag besitzt.

3. Verfahren nach Anspruch 1 oder 2, bei dem die mindestens zwei nach der vorgegebenen Codiervorschrift (7) für das Datum (D) generierten Datenwörter (DWA, DWB) zueinander invertiert sind.

4. Verfahren nach einem der voranstehenden Ansprüche, bei dem ein mit einem Fehler behaftetes Einzelbit des empfangenen Codedatenworts (CDW') unter Berücksichtigung der vorgegebenen Codiervorschrift (7) identifiziert und korrigiert wird.

5. Verfahren nach einem der voranstehenden Ansprüche, bei dem das empfangene Codedatenwort (CDW') nach einem zu dem Modulationsverfahren korrespondierenden Demodulationsverfahren im Fall des Auftretens einer mit einem Fehler behafteten Zweierbitfolge in mindestens zwei Datenwörter (DW$_1$', DW$_2$') umgewandelt und für diese Datenwörter (DW$_1$', DW$_2$') eine laufende digitale Summe berechnet wird, und diese laufende digitale Summe jeweils zur Bildung (17) einer zweiten laufenden digitalen Summe (S2) verwendet wird, wobei durch jeweiligen Vergleich dieser zweiten laufenden digitalen Summen (S2) mit der empfangenen ersten laufenden digitalen Summe (S1) der aufgetretene Fehler identifiziert und korrigiert wird.

6. Verfahren nach einem der voranstehenden Ansprüche, bei dem das Datenwort (DW) durch ein erstes DPSK-Verfahren moduliert wird, indem eine Bitfolge des Codedatenworts (CDW) nicht verändert wird, falls der folgende Bitwert des Datenworts (DW) einen ersten von zwei möglichen Bitwerten aufweist, und indem die Bitfolge invertiert wird, falls der folgende Bitwert des Datenworts (DW) einen zweiten von zwei möglichen Bitwerten aufweist.

7. Verfahren nach einem der Ansprüche 1 bis 5, bei dem das Datenwort (DW) durch ein zweites DPSK-Verfahren moduliert wird, indem der Zweierbitfolge in dem Codedatenwort (CDW) für ein zu modulierendes Bit des Datenworts (DW) eine erste von zwei möglichen Bitfolgen zugeordnet wird, falls das zu modulierende Bit des Datenworts (DW) als Bitwert eine Null aufweist, und indem der Zweierbitfolge in dem Codedatenwort (CDW) für ein zu modulierendes Bit des Datenworts (DW) eine zweite von zwei möglichen Bitfolgen zugeordnet wird, falls das zu modulierende Bit des Datenworts (DW) als Bitwert eine Eins aufweist.

8. Verfahren nach einem der voranstehenden Ansprüche, bei dem das Codedatenwort (CDW) und die erste laufende digitale Summe (S1) innerhalb eines Systems (1) von einem ersten Teilnehmer (3) bereitgestellt sowie gesendet und von mindestens einem zweiten Teilnehmer (5) empfangen werden und die zweite laufende digitale Summe (S2) von dem mindestens einen zweiten Teilnehmer (5) berechnet wird, und bei dem ein mit einem Fehler behaftetes Bit des Codedatenworts (CDW) von dem mindestens einen zweiten Teilnehmer (5) erkannt und korrigiert wird.

9. System, das dazu ausgebildet ist, für ein Datum (D), das zwischen mindestens zwei Teilnehmern (3, 5) zu übertragen ist, eine Fehlerbehandlung durchzuführen, aufweisend

- einen ersten Teilnehmer (3), der dazu ausgebildet ist, für das Datum (D) mindestens zwei aus Bits bestehende Datenwörter (DWA, DWB) nach einer vorgebbaren Codiervorschrift (7) zu generieren, und eines dieser generierten Datenwörter (DWA, DWB) unter Berücksichtigung einer über das entsprechende Datenwort gebildeten laufenden digitalen Summe, wobei die laufende digitale Summe eines Datenwortes einer aufsummierten Differenz einer Gesamtzahl der Einsen und einer Gesamtzahl der Nullen über das Datenwort entspricht, auszuwählen, die laufende digitale Summe des ausgewählten Datenworts (DW) zur Bildung einer ersten laufenden digitalen Summe (S1) zu verwenden, das ausgewählte Datenwort (DW) nach einem Modulationsverfahren (13) in ein Codedatenwort (CDW) umzuwandeln, wobei jeweils einem Bit des ausgewählten Datenworts (DW) eine Zweierbitfolge mit zwei unterschiedlichen Einzelbitwerten zuzuordnen ist, und das Codedatenwort (CDW) und die erste laufende digitale Summe (S1) an mindestens einen zweiten Teilnehmer (5) zu übertragen,
- mindestens einen zweiten Teilnehmer (5), der dazu ausgebildet ist, für ein empfangenes Codedatenwort (CDW') zu überprüfen, ob in diesem eine Zweierbitfolge mit zwei gleichen Einzelbitwerten auftritt, und somit eine mit einem Fehler behaftete Zweierbitfolge zu identifizieren und den Fehler mittels der ersten laufenden digitalen Summe (S1) zu korrigieren.

10. Computerprogramm mit Programmcodemitteln, um alle Schritte eines Verfahrens nach einem der Ansprüche 1 bis 8 durchzuführen, wenn das Computerprogramm auf einem Computer oder einer entsprechenden Recheneinheit durchgeführt wird.

11. Computerprogrammprodukt mit Programmcodemitteln, die auf einem computerlesbaren Datenträger gespeichert sind, um alle Schritte eines Verfahrens nach einem der Ansprüche 1 bis 8 durchzuführen, wenn das Computerprogramm auf einem Computer oder einer entsprechenden Recheneinheit durchgeführt wird.

**Claims**

1. Method for dealing with errors in a transmission (15) of a data item (D) via a communication system (1),

   - in which at least two data words (DWA, DWB) consisting of bits are generated according to a predetermined coding rule (7) for the data item (D) and one of these generated data words (DWA, DWB) is selected, taking into consideration (11) a running digital total formed over the corresponding data word (DWA, DWB), wherein the running digital total of a data word corresponds to an added difference of a total number of the ones and of a total number of the zeros over the data word, and the running digital total of the selected data word (DW) is used for forming (9) a first running digital total (S1),
   - in which the selected data word (DW) is converted into a code data word (CDW) according to a modulation method (13), wherein in each case a two-bit sequence with two different single-bit values is allocated to one bit of the data word (DW),
   - in which the code data word (CDW) and the first running digital total (S1) are transmitted,
   - in which a received code data word (CDW') is checked to see whether a two-bit sequence with two equal single-bit values occurs in it, by this means a two-bit sequence with an error is identified and is corrected by means of the first running digital total (S1).

2. Method according to Claim 1, in which the selected data word (DW) for the data item (D) is selected from the at least two generated data words (DWA, DWB) under the condition that the first running digital total (S1) has a smallest possible value.

3. Method according to Claim 1 or 2, in which the at least two data words (DWA, DWB) generated for the data item (D) in accordance with the predetermined coding rule (7) are inverted with respect to one another.

4. Method according to one of the preceding claims, in which a single bit with an error of the received code data word (CDW') is identified and corrected, taking into consideration the predetermined coding rule (7).

5. Method according to one of the preceding claims, in which the received code data word (CDW') is converted into at least two data words ($DW_1'$, $DW_2'$) in accordance with a demodulation method corresponding to the modulation method, in the case of the occurrence of a two-bit sequence with an error, and a running digital total is calculated for these data words ($DW_1'$, $DW_2'$), and this running digital total is in each case used for forming (17) a second running digital total (S2), wherein the error which has occurred is identified and corrected by a respective comparison of this second running digital total (S2) with the received first running digital total (S1).

6. Method according to one of the preceding claims, in which the data word (DW) is modulated by a first DPSK method in that a bit sequence of the code data word (CDW) is not changed if the following bit value of the data word (DW) has a first one of two possible bit values, and in that the bit sequence is inverted, if the following bit value of the data word (DW) has a second one of two possible bit values.

7. Method according to one of Claims 1 to 5, in which the data word (DW) is modulated by a second DPSK method in that a first one of two possible bit sequences is allocated to the two-bit sequence in the code data word (CDW) for a bit to be modulated in the data word (DW) if the bit to be modulated in the data word (DW) has a zero as bit value, and in that a second one of two possible bit sequences is allocated to the two-bit sequence in the code data word (CDW) for a bit to be modulated in the data word (DW) if the bit to be modulated in the data word (DW) has a one as bit value.

8. Method according to one of the preceding claims, in which the code data word (CDW) and the first running digital total (S1) are provided and transmitted by a first user (3) within a system (1) and received by at least a second user (5), and the second running digital total (S2) is calculated by the at least one second user (5) and in which an errored bit of the code data word (CDW) is recognized and corrected by the at least one second user (5).

9. System which is arranged for carrying out error treatment for a data item (D) which is to be transmitted between at least two users (3, 5), having

- a first user (3) which is arranged for generating for the data item (D) at least two data words (DWA, DWB) consisting of bits in accordance with a predeterminable coding rule (7), and to select one of these generated data words (DWA, DWB), taking into consideration a running digital total formed over the corresponding data word, wherein the running digital total of a data word corresponds to an added difference of a total number of the ones and of a total number of the zeros over the data word, to use the running digital total of the selected data word (DW) for forming a first running digital total (S1), to convert the selected data word (DW) into a code data word (CDW) in accordance with a modulation method (13), wherein in each case a two-bit sequence with two different single-bit values is to be allocated to one bit of the selected data word (DW) and to transmit the code data word (CDW) and the first running digital total (S1) to at least one second user (5),
- at least one second user (5) which is arranged to check for a received code data word (CDW') whether a two-bit sequence with two equal single-bit values occurs in it and thus to identify an errored two-bit sequence and to correct the error by means of the first running digital total (S1).

10. Computer program with program code means for carrying out all steps of a method according to one of Claims 1 to 8, when the computer program is executed on a computer or a corresponding computing unit.

11. Computer program product with program code means which are stored on a computer-readable data medium in order to carry out all steps of a method according to one of Claims 1 to 8 when the computer program is executed on a computer or a corresponding computing unit.

**Revendications**

1. Procédé de traitement d'erreur lors de la transmission (15) d'une donnée (D) par un système de communication (1), selon lequel

- pour la donnée (D) on génère au moins deux mots de données composés de bits (DWA, DWB) selon une prescription de codage prédéfinie (7) et on sélectionne l'un de ces mots de données généré (DWA, DWB) en tenant compte (11) d'une somme numérique courante formée par le mot de données correspondant (DWA, DWB), la somme numérique courante d'un mot de données correspondant à la somme de la différence d'un nombre total des uns et d'un nombre total des zéros dans le mot de données, et on utilise la somme numérique courante du mot de données sélectionné (DW) pour former (9) une première somme numérique courante (S1),
- on convertit le mot de données sélectionné (DW) selon un procédé de modulation (13) en un mot de données codé (CDW) et à chaque bit du mot de données (DW), on associe une suite de deux bits avec deux valeurs de bit distinctes, différentes,
- on transmet le mot de données de code (CDW) et la première somme numérique courante (S1),
- on vérifie ensuite un mot de données de code (CDW'), reçu pour déterminer si dans celui-ci il y a une succession de deux bits ayant deux valeurs de bit simples, identiques, et ainsi on identifie une suite de deux bits entachés d'une erreur et on corrige à l'aide de la première somme numérique courante (S1).

**2.** Procédé selon la revendication 1,
selon lequel
on sélectionne le mot de données sélectionné (DW) pour la données (D) à partir d'au moins deux mots de données générés (DWA, DWB) à la condition que la première somme numérique courante (S1) possède la plus petite valeur absolue possible.

**3.** Procédé selon la revendication 1 ou 2,
selon lequel
on inverse l'un par rapport à l'autre au moins les deux mots de données (DWA, DWB) générés selon la prescription de codage prédéfinie (7) pour la donnée (D).

**4.** Procédé selon les revendications précédentes,
selon lequel
on identifie et on corrige un bit simple entaché d'erreur dans le mot de données codé, reçu (CDW') en tenant compte de la prescription de codage prédéfinie (7).

**5.** Procédé selon les revendications précédentes,
selon lequel
on convertit le mot de données codé reçu (CDW') selon un procédé de démodulation correspondant au procédé de démodulation dans le cas de l'arrivée d'une suite de deux bits entachés d'une erreur dans au moins deux mots de données (DW$_1$', DW$_2$') et on calcule une somme numérique courante pour ces mots de données (DW$_1$', DW$_2$') et on utilise cette somme numérique courante chaque fois pour former (17) l'une des deux sommes numériques courantes (S2), et chaque fois par la comparaison de ces eux sommes numériques courante (S2) avec la première somme numérique courante (S1), reçue on identifie et on corrige l'erreur qui s'est produite.

**6.** Procédé selon les revendications précédentes,
selon lequel
on module le mot de données (DW) par un premier procédé DPSK en ce que l'on ne modifie pas une suite de bit du mot de données codé (DW) si la valeur de bit suivante du mot de données (DW) présente une première des deux valeurs possibles du bit et en ce que on inverse la suite des bits si la valeur de bit suivante du mot de données (DW) présente une seconde des deux valeurs de bit possibles.

**7.** Procédé selon les revendications 1 à 5,
selon lequel
on module le mot de données (DW) par un second procédé DPSK en ce qu'on associe à la suite des deux bits dans le mot de données codé (CDW) pour un bit à moduler du mot de données (DW), une première parmi deux suites possibles de bit si le bit à moduler dans le mot de données (DW) présente comme valeur de bit un zéro et en ce qu'on associe à la suite de deux bits dans le mot de données codé (CDW) pour un bit à moduler dans le mot de données (DW), une seconde parmi les deux suites de bit possibles si le bit à moduler dans le mot de données (DW) a comme valeur de bit un.

**8.** Procédé selon les revendications précédentes,
selon lequel
on envoie le mot de données codé (CDW) et la première somme numérique courante (S1) dans un système (1) fourni par un premier participant (3) et ils sont reçus par au moins un second participant (5), et la seconde somme numérique courante (S2) est calculée par au moins un second participant (5), et
selon lequel, un bit entaché d'une erreur dans le mot de données codé (CDW) est reconnu et corrigé par au moins un second participant (5).

**9.** Système réalisé pour effectuer un traitement d'erreur pour une donnée (D) transmise entre au moins deux participants (3 et 5), comprenant:

- un premier participant (3) réalisé pour générer pour la donnée (D), au moins deux mots de données (DWA, DWB) composés de bits, selon une prescription de codage (7) prédéfinie et sélectionner l'un des mots de données générés (DWA, DWB) en tenant compte d'une somme numérique courante formée à partir du mot de données correspondant,
- la somme numérique courante d'un mot de données correspondant à la somme de la différence du nombre total des uns et du nombre total des zéros du mot de données, de sélectionner la somme numérique courante du mot de données (DW) pour former une première somme numérique courante (S1) à utiliser, à transformer le mot de données sélectionné (DW) selon un procédé de modulation (13) pour obtenir un mot de données codé (CDW), et chaque fois un bit du mot de données sélectionné (DW) étant associé à une suite de deux bits avec des valeurs différentes pour les bits simples, et

- on transmet le mot de données codé (CDW) et la première somme numérique courante (S1) vers au moins un second participant (5),

- au moins un second participant (5) est réalisé pour vérifier sur un mot de données codé reçu (CDW') si celui-ci a une suite de deux bits avec deux bits simples, identiques, et d'identifier ainsi une suite de deux bits entachés d'une erreur et de corriger l'erreur à l'aide de la première somme numérique courante (S1).

10. Programme d'ordinateur comportant des moyens de code de programme pour exécuter toutes les étapes d'un procédé selon les revendications 1 à 8 lorsque le programme d'ordinateur est exécuté sur un ordinateur ou sur une unité de calcul.

11. Produit programme d'ordinateur comportant des moyens de code de programme enregistrés sur un support de données que peut lire un ordinateur pour exécuter toutes les étapes d'un procédé selon les revendications 1 à 8 lorsque le programme d'ordinateur est exécuté sur un ordinateur ou sur une unité de calcul correspondante.

# FIG. 1